# EUROPEAN PATENT SPECIFICATION

(11) **EP 0 947 711 B1**
(45) Date of publication and mention of the grant of the patent: **04.06.2003**
(21) Application number: 99200947.2
(22) Date of filing: 26.03.1999
(51) Int. Cl.: F16B 7/04, A63B 9/00

(54) **System for assembling a climbing frame**
Verbindungssystem eines Kletterrahmens
Système d'assemblage d'un cadre d'escalade

(30) Priority: 26.03.1998 NL 1008717
(43) Date of publication of application: 06.10.1999
(73) Proprietor: Kunststoffenfabriek C.A. Boer B.V., 4255 HX Nieuwendijk (NL)
(72) Inventor: Boer, Jan, 4254 XK Sleeuwijk (NL)
(74) Representative: Prins, Adrianus Willem

(56) References cited:
- FR-A- 2 712 044
- US-A- 4 084 812
- US-A- 4 398 841
- US-A- 4 864 795
- US-A- 5 554 074

## Description

The invention relates to a system for assembling a climbing frame, comprising supporting posts, supports and clamping members for connecting the supporting posts and the supports, which clamping members each comprise two clamps which each have a first head part in which a recess is provided and a second head part, which head parts are connected by a back part whose inner side is formed to correspond to a part of the circumferential wall of a supporting post, of which clamping members the clamps can, by connecting means, be annularly clamped and secured around a supporting post with their respective first and second head parts against each other, so that the recesses in the first head parts together form a bearing opening in which at least a part of a support can be secured at an angle relative to the longitudinal direction of the supporting post, in particular transversely to the supporting post, while the coupled clamps comprise at least one further bearing opening for securing a further support which encloses an angle with the first support.

It is observed that in this context, 'supports' are meant to include bar-shaped or plate-shaped constructional elements which are mounted at least partially between the supporting posts of the climbing frame and which form a cross bracing between the supporting posts, such as joists, bearing girders, railings, platforms, roofs, slides, etc.

Such a system is known from US 4 864 795. The clamping members of this system comprise different types of clamps which can be annularly clamped and secured around a supporting post, to form bearing openings in which supports can be secured.

A drawback of the system according to US 4 864 795 is that the supports are secured through clamping or by means of locking screws, as a consequence of which there is a considerable chance of the supports coming loose. When the supports of a climbing frame come loose, this may lead to dangerous playing situations, as it creates intermediate distances between successive supports of the climbing frame that cannot be bridged by children, or may in extreme cases even cause the collapse of the climbing frame during play. Further, children may injure themselves on released bearing openings.

A further drawback of the system according to US 4 864 795 is that for assembling a climbing frame, a relatively large number of clamp types are required.

The object of the invention is to provide a system of the type mentioned in the preamble, wherein the above-mentioned drawbacks are avoided.

To that end, the system according to the invention is characterized in that the clamps are provided, adjacent their recesses, with openings in which a bolt can be passed, such that the bolt cross the bearing opening and the support received therein.

It is thus provided that the supports can be locked in the bearing openings in a reliable fashion, so that the chance of the supports coming loose can be considerably reduced and a reliable, robust construction can be obtained in a simple manner.

In another embodiment, the system according to the invention is characterized in that it comprises a closing member which, instead of a support, can be received in a bearing opening such that the bolt can intersect the closing member. It is thus provided that a bearing opening, when not used for receiving a support, can be closed off in a reliable fashion, so that it no longer causes any danger to children. Because of this reliable closure, fewer clamp types may suffice in practice, since unused bearing openings can be filled up without the danger of coming loose. The closing member is preferably designed as cap.

In an advantageous embodiment, the system according to the invention is characterized in that the two second head parts are provided with a recess, which recesses, when the second head parts are clamped one against the other, together form a further bearing opening. It is thus provided that by means of one type of clamp, selectively one or two supports can be connected to a supporting post. Preferably, the bearing openings extend in line, so that it is possible to secure supports therein which enclose an angle of 180° relative to each other.

In another embodiment, the system according to the invention is characterized in that at least one of the clamps of at least a part of the clamping members has a back part having a recess provided in an outer side thereof, which recess constitutes a further bearing opening. This enables connecting, by means of the clamping member, two supports to a supporting post at a different angle relative to each other, for instance an angle of 90°.

It is observed that when the system comprises a clamp of a first type in which recesses are provided in the head parts only, and a clamp of a second type which is similar, but in which, moreover, a recess is provided in the back part, a system is obtained that has a limited number of components and a substantial freedom of construction. Through combination of the types of clamps, it is for instance possible to compose a clamping member having a smallest possible top surface which selectively connects one, two, three or four supports to a supporting post. The effect of a smallest possible top surface is that a child cannot easily find support on the clamp, so that the situation where a child can climb up along the clamping members rather than along the supports is avoided in a safety-increasing manner. It is further observed that it is also possible to use only the first type of clamp when the unused bearing openings are filled up with a closing member.

In yet another embodiment, the system according to the invention is characterized in that the clamps each have their inner sides provided with friction-increasing means, in particular a serrated edge. It is thus provided that when the clamping member is secured around the supporting post, displacement thereof in longitudinal direction of the supporting post is obstructed to a high degree. In particular, this increases the safety when several supports are supported by one clamping member.

In still another embodiment, the system according to the invention is characterized in that when a recess is provided in the outer side of a back part of a clamp, the outer side of that back part is provided, in the area between that recess and the head part, with a reduction. Thus, the top surface of the clamping member is further reduced, which further prevents a child from climbing up along the clamping members.

In again another embodiment, the system according to the invention is characterized in that the supporting posts are designed as hollow pipes and that the system further comprises a closing body capable of being clamped in the end of a supporting post, which closing body is provided with a head face in which a bearing opening is recessed in which at least a part of a support can be received in longitudinal direction of the supporting post, or a closing member. It is thus provided that the supporting posts can be closed off while at the same time, the constructional freedom of the system is further increased. Indeed, by means of a support received in the bearing opening of the closing body, further building is possible, in longitudinal direction relative to the supporting post. By means of a support mounted in such a manner, a roof or a railing can, for instance, be mounted on the supporting post. In some cases, the supporting post can, on account thereof, be of shorter design, which reduces the costs of assembling a climbing frame.

The invention will hereinafter be specified with reference to an exemplary embodiment of a system for assembling a climbing frame shown in the accompanying drawings. In these drawings:
Fig. 1 is a schematic top plan view of a clamping member connecting three supports to a supporting post;
Fig. 2 is a schematic side elevation of the clamping member of Fig. 1;
Fig. 3 is a schematic side elevation of a closing member;
Fig. 4 is a schematic side elevation of a closing body; and
Fig. 5 is a schematic, perspective view of an assembled climbing frame.

It is observed that the Figures are only schematic representations of a preferred embodiment of a system according to the invention. In the Figures, identical or like components are designated by corresponding reference numerals.

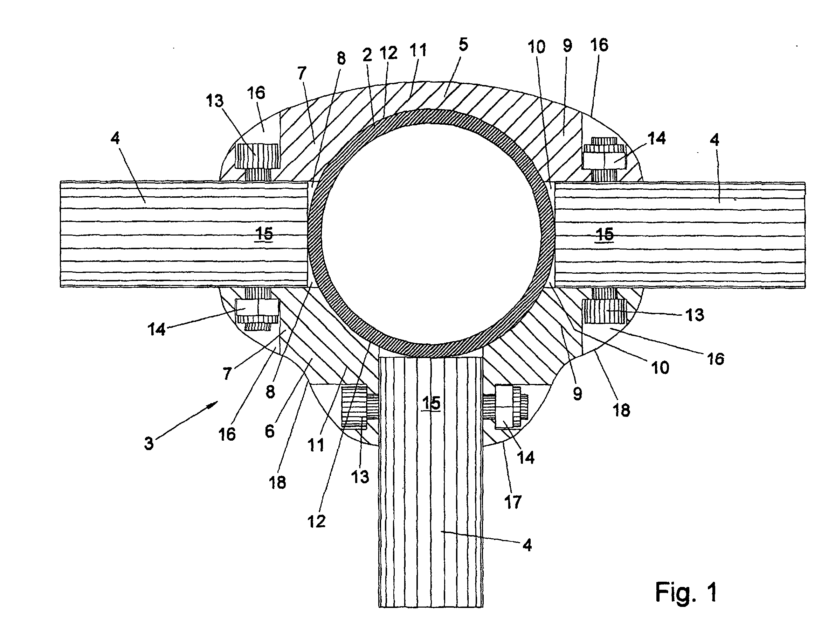

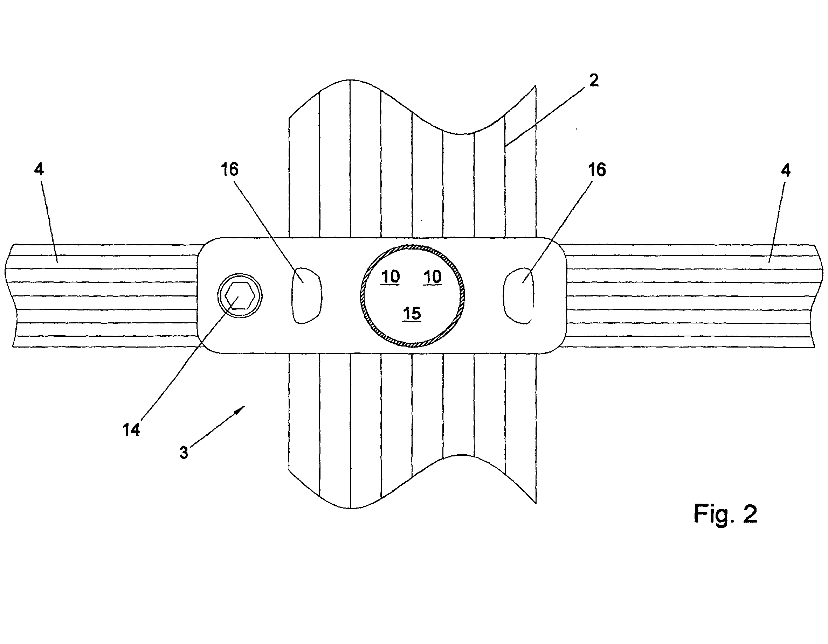

Figs. 1 and 2 show a part of a climbing frame 1 assembled by means of a system according to the invention. In the Figure, a supporting post 2 is visible which is connected to three supports 4 by a clamping member 3.

The clamping member 3 comprises two types of clamps designated by reference numerals 5 and 6. The clamps 5, 6 each comprise a first head part 7 provided with a recess 8 and a second head part 9 provided with a recess 10. The head parts 7, 9 are connected by a back part 11 whose inner side 12 is formed to correspond to a part of the circumferential wall of the supporting post 2. By means of bolts 13 and nuts 14 and with their respective first and second head parts 7, 9 against each other, the clamps 5, 6 of the clamping member 3 are annularly clamped and secured around the supporting post 2. The recesses 8, 10 in the respective first and second head parts 7, 9 together form bearing openings 15. In the outer side 17 of the back part 11 of the clamp 6, there is also provided a recess, forming a further bearing opening 15.

By means of bearing openings 15, several supports 4 are secured at the same level and each at an angle of 90° relative to the longitudinal direction of the supporting post 2. The supports 4 enclose an angle of 90° or 180° relative to each other. Adjacent the recesses 8, 9, the clamps 5, 6 are provided with openings 16 in which the bolt 13 is passed, so that the bolt 13 crosses the bearing opening 15 and locks the support 4 included therein.

The back parts 11 of the clamps 5, 6 each have their inner side 12 provided with a serrated edge, not visible in the Figure, for obstructing displacement of the clamping member in longitudinal direction of the supporting post 2, i.e. perpendicular to the plane of the drawing. In the area between the recess that forms the bearing opening 15 and the head parts 7, 9, the outer side 17 of the back part 11 of the clamp 6 is provided with a reduction 18 to reduce the top surface of the clamp. The advantage hereof is that, thus, little supporting surface is present for a child to climb up along the support members.

When two clamps of the type 5 have their head parts 7, 9 clamped against each other, a clamping member 3 is formed whereby two supports can be connected to the supporting post 2, which supports may enclose an angle of 180° relative to each other. The advantage of such a clamping member is that it provides relatively little supporting area for climbing. When two clamps of the type 6 have their head parts 5, 6 clamped against each other, a clamping member 3 is formed whereby four supports 4 can be connected to a supporting post 2, with the successive supports each including an angle of 90° relative to each other.

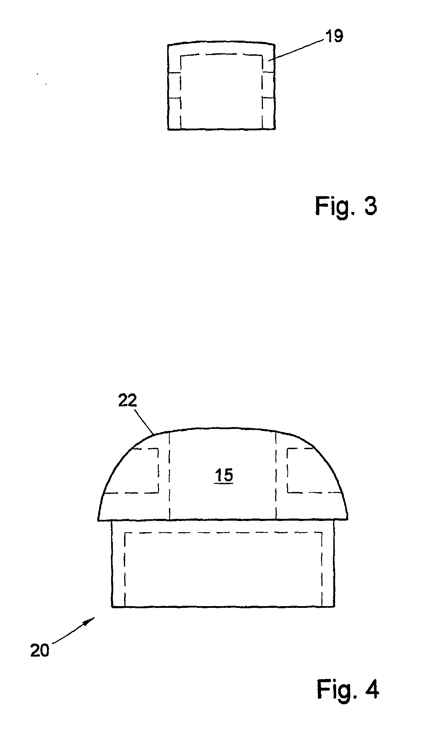

For increasing the safety, a bearing opening 15 can be closed off with a cap 19 (Fig. 3) when no support 4 is included in that bearing opening. The cap 19 may likewise be locked by means of a bolt 13 in the above-described manner.

Fig. 4 shows a closing body 20 that can be clamped in the end 21 of a supporting post 2. The closing member is provided with a preferably spherical head face 22 in which a bearing opening 15 is recessed. In the bearing opening 15, a support 4 can be received in longitudinal direction of the supporting post 2. If no support 4 is received in the bearing opening 15, the bearing opening 15 can be closed off by means of a cap 19. Preferably, the same cap 19 as for closing off the bearing openings 15 of the clamps 5, 6 is used therefor. The support 4 or the cap 19 is locked by means of a bolt 13 in the same fashion as described hereinabove.

The clamps, the cap and the closing member are preferably manufactured from aluminum to enhance the resistance of the climbing frame to vandalism.

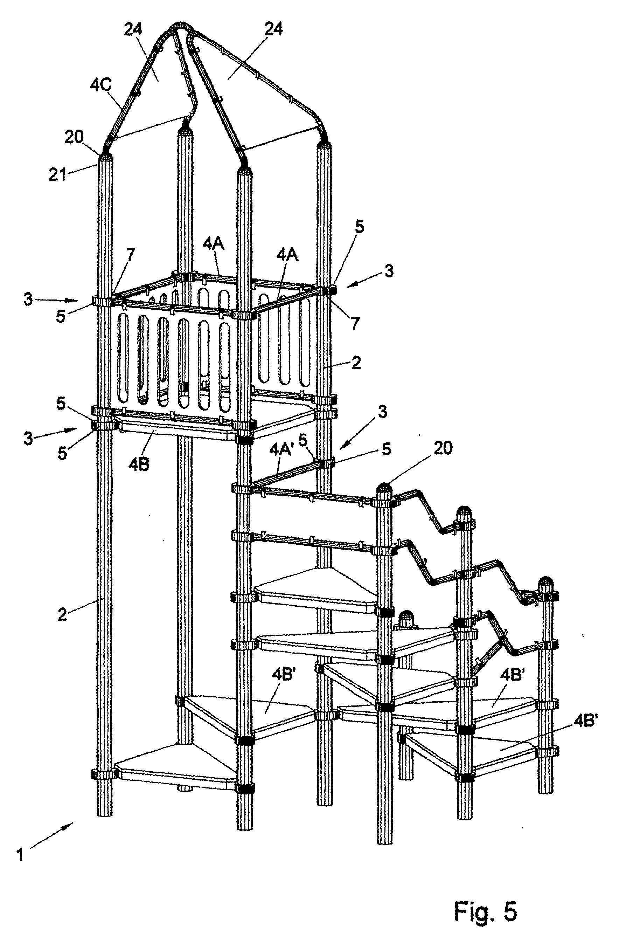

To illustrate the system, Fig. 5 shows a climbing frame 1 assembled by means of a system according to the invention. The climbing frame 1 comprises supporting posts 2, clamping members 3 and supports 4. The supporting posts 2 are spaced apart and extend substantially parallel in a longitudinal direction. The supports 4 extend between the supporting posts 2. The supports 4 form a cross bracing between the supporting posts 2 and, in the Figure, are designed as railings 4A, landings 4B and roof supports 4C.

By means of a clamping member 3, the railings 4A are secured to the supporting post 2 at the same level and at an angle of 90° relative to the longitudinal direction. Hence, the railings 4A lie in the same plane and enclose an angle of 90° relative to each other. Here, the clamping member 3 is composed of two types of clamps 5, 6. One of the bearing openings 15 is closed off with a cap 15, not shown.

The railing 4A' is secured by means of a clamping member 3 composed of two clamps 5, 5 of the same type. One of the bearing openings is closed off with a cap 15, not shown.

The landings 4B are likewise secured by means of a clamping member 3 composed of two clamps 5, 5 of the same type. One of the bearing openings is closed off with a cap 15, not shown. However, the landings can also be secured with clamping members 3 composed of two types of clamps 5, 6.

The landings 4B' illustrate the possibility of interconnecting three supporting posts 2 and the possibility of interconnecting two landings at the same level. It is observed that the landings can also be secured with clamping members 3 composed of two types of clamps 5, 6.

Clamped in the end 21 of the supporting posts 2 is a closing body 20. Accommodated in the bearing openings 15 of a number of the closing bodies 20, in longitudinal direction of the supporting post 2, is a roof support 4C, which roof supports 4C together support roof panels 24. In the bearing openings of the other closing bodies 20, a cap 19 is accommodated.

The angles at which the bearing openings are positioned relative to the supporting post may be varied, so that, for instance, the supports do not lie in one plane and/or enclose, other angles relative to each other. Further, according to the invention the second head part is designed without recess, as a result of which a bearing opening may be formed in one head part and in the back part only. Also, several, possibly asymmetrically arranged recesses may be provided in the back part of the clamp to increase the number of bearing openings and possible coupling angles. Further, the supporting post may have a different cross section, for instance a rectangular cross section. Also, the friction-increasing means may be designed differently, for instance as a layer of rubber.

## Claims

1. A system for assembling a climbing frame (1), comprising supporting posts (2), supports (4) and clamping members (3) for connecting the supporting posts (2) and the supports (4), said clamping members (3) each comprising two clamps (5,6) which each have a first head part (7) in which a recess (8) is provided and a second head part (9), said head parts (7,9) being connected by a back part (11) whose inner side is formed to correspond to a part of the circumferential wall of a supporting post (2), of which clamping members (3) the clamps (5,6) can, by connecting means, be annularly clamped and secured around a supporting post (2) with their respective first and second head parts (7,9) against each other, so that the recesses (8) in the first head parts (7) together form a bearing opening (15) in which at least a part of a first support (4) is secured at an angle relative to the longitudinal direction of the supporting post (2), in particular transversely to the supporting post (2), while the coupled clamps (5,6) comprise at least one further bearing opening (15) and its corresponding recesses for securing a further support (4) which encloses an angle with the first support, **characterized in that** the clamps (5,6) are provided, adjacent the recesses, with openings in which a bolt (13) can be passed, in such a manner that the bolt (13) crosses the bearing opening (15) and the support (4) received therein.

2. A system according to claim 1, **characterized in that** it further comprises a closing member (20) which, instead of a support (4), can be received in a bearing opening (15), in such a manner that the bolt (13) crosses the closing member (20).

3. A system according to claim 1 or 2, **characterized in that** in both second head parts (9) a recess (10) is provided, said recesses (10), when the second head parts (9) are clamped one against the other, together forming a further bearing opening (15).

4. A system according to any one of claims 1-3, **characterized in that** at least one of the clamps (6) of at least a part of the clamping members (3) has a back part having a recess provided in an outer side thereof, which recess forms a further bearing opening (15).

5. A system according to any one of the preceding claims, **characterized in that** the clamps (5,6) each have their inner sides (12) provided with friction-increasing means, in particular a serrated edge.

6. A system according to any one of the preceding claims, **characterized in that** when a recess is provided in the outer side (17) of a back part (11) of a clamp (6), the outer sided (17) of said back part (11) is provided with a reduction (18) in the area between said recess and the head part (7,9).

7. A system according to any one of the preceding claims, **characterized in that** the supporting posts (2) are hollow pipes and the system further comprises a closing body (20) that can be clamped in the end (21) of a supporting post (2) said closing body (20) being provided with a head face (22) in which a bearing opening (15) is recessed in which at least a part of a support (4) can be accommodated in longitudinal direction of the supporting post (2), or a closing member (19).

8. A climbing frame (1) assembled with a system according to any one of the preceding claims.

## Patentansprüche

1. Ein System für das Zusammenbauen eines Kletterrahmens (1), umfassend Stützpfosten (2), Träger (4) und Klemmmittel (3) für die Verbindung der Stützpfosten (2) und der Träger (4), wobei die vorgenannten Klemmmittel (3) jeweils zwei Klemmbacken (5, 6) umfassen, die jeweils einen ersten Kopfteil (7), in dem eine Ausnehmung (8) vorgesehen ist, sowie einen zweiten Kopfteil (9) umfassen, wobei die vorgenannten Kopfteile (7, 9) vermittels eines rückwärtigen Teils (11) miteinander verbunden sind, dessen innere Seite derart geformt ist, dass sie einem Teil der umlaufenden Wandung eines Stützpfostens (2) entspricht, wobei die Klemmbacken (5, 6) dieser Klemmmittel (3) durch Verbindungsmittel ringförmig um einen Stützpfosten (2) herum geklemmt und befestigt werden können mit ihren entsprechenden ersten und zweiten Kopfteilen (7, 9) gegeneinander, so dass die Ausnehmungen (8) in den ersten Kopfteilen (7) zusammen eine Lageröffnung (15) formen, in der mindestens ein Teil eines ersten Trägers (4) befestigt ist unter einem Winkel relativ zu der Längsrichtung des Stützpfostens (2), insbesondere schief zu dem Stützpfosten (2), wobei die miteinander gekoppelten Klemmbacken (5, 6) mindestens eine weitere Öffnung (15) und ihre entsprechenden Ausnehmungen umfassen für die Befestigung eines weiteren Trägers (4), der einen Winkel mit dem ersten Träger (1) einschließt, **dadurch gekennzeichnet, dass** die Klemmbacken (5, 6) benachbart zu den Ausnehmungen mit Öffnungen versehen sind, in die ein Bolzen (13) derart eingebracht werden kann, dass der Bolzen (13) die Lageröffnung (15) und den darin aufgenommenen Träger (4) durchquert.

2. Ein System nach Anspruch 1, **dadurch gekennzeichnet, dass** es weiterhin ein Verschlussmittel (20) umfasst, das anstelle eines Trägers (4) derart in einer Lageröffnung (15) aufgenommen werden kann, dass der Bolzen (13) das Verschlussmittel (20) durchquert.

3. Ein System nach Anspruch 1 oder 2, **dadurch gekennzeichnet, dass** in beiden zweiten Kopfteilen (9) eine Ausnehmung (10) vorgesehen ist, wobei die Ausnehmungen (10) dann zusammen eine weitere Lageröffnung (15) formen, wenn die zweiten Kopfteile (9) aneinander geklemmt sind.

4. Ein System nach einem der Ansprüche 1 bis 3, **dadurch gekennzeichnet, dass** wenigstens eine der Klemmbacken (6) wenigstens eines Teiles der Klemmmittel (3) einen rückwärtigen Teil mit einer in einer seiner Außenseiten vorgesehenen Ausnehmung hat, wobei diese Ausnehmung eine weitere Lageröffnung (15) bildet.

5. Ein System nach irgendeinem der vorangehenden Ansprüche, **dadurch gekennzeichnet, dass** die inneren Seiten (12) einer jeden der Klemmbacken (5, 6) mit reibungserhöhenden Mitteln versehen sind, insbesondere mit einem gezahnten Rand.

6. Ein System nach irgendeinem der vorangehenden Ansprüche, **dadurch gekennzeichnet, dass** dann, wenn eine Ausnehmung in der Außenseite (17) eines rückwärtigen Teils (11) einer Klemmbacke (6) vorgesehen ist, die Außenseite (17) des vorgenannten rückwärtigen Teils (11) mit einem Rücksprung (18) versehen ist in der Fläche zwischen der vorgenannten Ausnehmung und dem Kopfteil (7, 9).

7. Ein System nach irgendeinem der vorangehenden Ansprüche, **dadurch gekennzeichnet, dass** die Stützpfosten (2) Hohlrohre sind und dass das System weiterhin einen Verschlusskörper (20) umfasst, der in das Ende (21) eines Stützpfostens (2) geklemmt werden kann, wobei der vorgenannte Stützkörper (20) mit einer Kopffläche (22) versehen ist, in der eine Lageröffnung (15) ausgenommen ist, in die mindestens ein Teil eines Trägers (4) in Längsrichtung des Stützpfostens (2) oder ein Verschlussmittel (19) eingebracht werden können.

8. Ein Kletterrahmen (1) zusammengebaut vermittels eines Systems nach irgendeinem der vorangehenden Ansprüche.

## Revendications

1. Système d'assemblage d'un cadre d'escalade (1), comprenant des poteaux de support (2), des supports (4) et des éléments de serrage (3) destinés à relier les poteaux de support (2) et les supports (4), lesdits éléments de serrage (3) comprenant chacun deux pinces (5, 6) qui comportent chacune une première partie de tête (7) dans laquelle un évidement (8) est prévu et une seconde partie de tête (9), lesdites parties de tête (7, 9) étant reliées par une partie arrière (11) dont le côté intérieur est conformé pour correspondre à une partie de la paroi circonférentielle d'un poteau de support (2), éléments de serrage (3) dont les pinces (5, 6) peuvent, grâce à des moyens de liaison, être serrées et fixées de manière annulaire autour d'un poteau de support (2), leurs première et seconde parties de tête respectives (7, 9) étant l'une contre l'autre, de sorte que les évidements (8) dans les premières parties de tête (7) forment ensemble une ouverture de support (15) dans laquelle au moins une partie d'un premier support (4) est fixée en faisant un angle avec la direction longitudinale du poteau de support (2), en particulier transversalement au poteau de support (2), tandis que les pinces accouplées (5, 6) constituent au moins une autre ouverture de support (15) avec les évidements correspondants destinés à fixer un autre support (4) qui fait un angle avec le premier support, **caractérisé en ce que** les pinces (5, 6) sont munies, de façon contiguë aux évidements, d'ouvertures dans lesquelles un boulon (13) peut être passé, de telle manière que le boulon (13) traverse l'ouverture de support (15) et le support (4) reçu dans celle-ci.

2. Système selon la revendication 1, **caractérisé en ce qu'**il comprend en outre un élément de fermeture (20) qui, au lieu d'un support (4), peut être reçu dans une ouverture de support (15), de telle manière que le boulon (13) traverse l'élément de fermeture (20).

3. Système selon la revendication 1 ou 2, **caractérisé en ce que** dans les deux secondes parties de tête (9), un évidement (10) est prévu, lesdits évidements (10), lorsque les secondes parties de tête (9) sont serrées l'une contre l'autre, formant ensemble une autre ouverture de support (15).

4. Système selon l'une quelconque des revendications 1 à 3, **caractérisé en ce qu'**au moins l'une des pinces (6) d'au moins une partie des éléments de serrage (3) présente une partie arrière comportant un évidement disposé dans un côté extérieur de celle-ci, lequel évidement forme une autre ouverture de support (15).

5. Système selon l'une quelconque des revendications précédentes, **caractérisé en ce que** les pinces (5, 6) sont chacune munies, sur leur côté intérieur (12), de moyens augmentant le frottement, en particulier un bord dentelé.

6. Système selon l'une quelconque des revendications précédentes, **caractérisé en ce que**, lorsqu'un évidement est prévu dans le côté extérieur (17) d'une partie arrière (11) d'une pince (6), le côté extérieur (17) de ladite partie arrière (11) est muni d'une réduction (18) dans la zone entre ledit évidement et la partie de tête (7, 9).

7. Système selon l'une quelconque des revendications précédentes, **caractérisé en ce que** les poteaux de support (2) sont des tubes creux et **en ce que** le système comprend en outre un corps de fermeture (20) qui peut être serré dans l'extrémité (21) d'un poteau de support (2), ledit corps de fermeture (20) étant muni d'une face de tête (22) dans laquelle une ouverture de support (15) ménagée en retrait, dans laquelle au moins une partie d'un support (4) peut être reçue dans la direction longitudinale du poteau de support (2), ou d'un élément de fermeture (19).

8. Cadre d'escalade (1) monté avec un système conforme à l'une quelconque des revendications précédentes.
